# EUROPEAN PATENT APPLICATION

(11) **EP 2 876 229 A1**
(43) Date of publication of application: **27.05.2015**
(21) Application number: 14003302.8
(22) Date of filing: 24.09.2014
(51) Int. Cl.: E04D 13/16

(54) **COMBINATION INSULATION FIXING TO RETAIN INSULATION AND SET/MAINTAIN AN AIR GAP BETWEEN MATERIAL SURFACES**

(30) Priority: 24.09.2013 GB 201316974
(71) Applicant: Perry, Richard, Trowbridge Wiltshire BA1 4 8DP (GB)
(72) Inventor: Perry, Richard, Trowbridge Wiltshire BA1 4 8DP (GB)

(57) **Abstract**

A Combination Insulation Fixing To Retain Insulation And Set/Maintain Air Gaps

Between Material Surfaces comprising a main body formed as a square or rectangle incorporating at least one insulation retaining arm and insulation fixing depth limiting leg and foot, said foot that may be separate, any or all of which may incorporate at least one of any of a hole, slot, aperture, retaining tooth, flange, prong, perforation, strengthening channel, channelled or recessed parts, hinged parts, adjustable parts, measurement scale, said main body that may be formed into a channel and/or symmetrical pattern to retain two or more sides of an insulation against one or more sides of a rafter or studwork or fixing surface, said main body that may also have wire retaining flanges and be curved and shaped to fit around different shapes and sizes of rafters and materials such as pipes, tubes and timber.

## Description

This invention relates to a Combination Insulation Fixing To Retain Insulation And Set/Maintain An Air Gap Between Material Surfaces.

In my previous patents GB2461652 and GB2467861 I invented several different insulation fixings to retain different types of insulation such as soft wool, fibreglass, thermal board, acoustic board etc. between studwork timber and rafters in roofs. I invented the Y shape fixing for soft insulation types and the elongate finger type fixing for rigid board insulation materials (although either type can be used on all insulation) both having additional gripping capabilities through the use of one or more retaining teeth incorporated into the body and overlying the insulation with an opposite end of the body overlying the rafter or studwork and fixed by a nail through a hole in the body.

After having trialled and tested these products I found that whilst they do a very good job of retaining the insulation by sitting on the outer surface of the insulation material, I still have to use a backing piece fixed to the inner side of the rafter and behind the insulation to keep the insulation positioned and clamped towards the front outer face edge of the rafter (the bit you see when you look up at the rafter from below) to be able to create a breathing gap for airflow and circulation between the back or underside of the insulation/backing piece and between the inner side of the felt lining membrane of the roof that faces opposite the underside/back of the insulation. This clamping and positioning of the insulation seems to mean I still end up using twice as many fixings to do the same job; backing pieces and fixings to fix them and my Rafterclips® and fixing the clips. The insulation fixed without using the backing piece still flaps around when strong gusts of wind or air currents circulate through the loft as the thermal board type insulation will always have some movement in it unless it is cut absolutely precisely and, the average DIY'er seldom cuts it absolutely precisely! To try to explain this breathing gap and set up arrangement a bit better: if we had a thick rectangular piece of timber stood on edge (and looking at it from a cross section view) and underneath it there is a lining membrane and flush with the top of it there is the insulation, there has to be a gap between the underside of the insulation and the top surface or insulation facing side of the membrane, said gap made down the vertical height of the timber. In this set up and from a cross section view you would still be able to see a portion of the timber in the middle between the bottom or underside of the insulation and the top of the membrane the timber is sat on - this is where the air gap is found/created in the roofing application. My previous fixings only *overlie the top* outer face of the insulation and the problem this has is that the insulation still gets rattled or flapped about from underlying winds flowing across the underside of the insulation through the gap between the felt/membrane and the underside of the insulation. In roofing and some studwork applications such as in constructing retaining walls, it is important to have a breathing gap. This is to allow the roof to breathe and maintain air flow through the roof structure between the underside of the insulation and the inner side of the roofing tiles or roofing felt (depending on how the roof is constructed) to prevent the timbers warping and to prevent condensation building up which leads to damp and rot and all sorts of other structural problems. The gap may also be used to run wires and lights through it by fixing them to the timbers and therefore the gap also reduces risk of fires as the insulation is kept away from completely surrounding the wires which would increase build-up of heat in the insulation material that could easily catch on fire. So going back to the backing piece mentioned earlier, in order to achieve/create or maintain this gap, usually one would fix some sort of backing batten or other blocking material such as an elongate L shaped rod or solid elongate batten to the main structure materials such as the rafter or studwork at a measured specified depth, to limit the depth to which the insulation can be pushed back to/set from/ the front of the timber, for example: if there has to be a 1" breathing gap between the underside of the insulation and the membrane, the back of the batten would be fixed 1" up from the membrane surface and then the insulation is pushed and fixed against the top side of batten, and then one would use a second fixing to overlie the insulation and rafter from the front to stop the insulation falling out. The problem with the L continuous elongate angles or battens is that they still do not *overlie the insulation* and can only fix to the insulation from the underside, or they only fix to a maximum of two sides of the insulation - back and side and not the two important sides which are the front (outerside) and the back (underside) which means that there is still the problem of having to use another fixing to clamp the insulation in place. Also the continuous elongate L shaped pieces or battens are not very versatile and they have to be used only as a backing piece and can only fix to one side of the rafter, so there is not as much support for the weight of the insulation around/encapsulating the body of the insulation. There is no adjustability and, then one has to spend lots of time measuring the depth of the rafters to ensure there is a breathing gap left after the channel is permanently fixed, by marking off the required depth to ensure the insulation fits, to then fit the insulation and then to hold the insulation in place between the rafters with yet another fixing over the top, which is a time consuming trauma and difficult for one person to do alone. Often two people are doing this job - one holding and one fixing. I also found that the retaining teeth pierce the insulation very easily and do grip it in place, but with very light thermal board the teeth are pulled out of the insulation quite easily if there is a large gust of wind and the smooth plain non-barbed teeth need to have mini teeth incorporated into the main tooth as a secondary back up and extra gripping strength like a barb on a fishing hook and bent out of alignment of the main teeth/tooth to pierce the insulation in more places on its body for a better grip. There is also another problem with roof construction incorporating insulation: due to advancements in building techniques and materials I have found out that often two breathing gaps are now needed; one between the roof membrane and the insulation and one between the inner side of the insulation and the plasterboard that would board over it. One gap is often used for the wires and one for the air to keep the two separate and block off the wire gap from condensation etc.

What is needed to solve these problems due to the different thicknesses, shapes and sizes of both insulation materials and rafters and studwork timber, is a means to 'stop', limit, create and/or maintain this breathing gap or more than one breathing gap through the use of a fixing that supports two or more sides of the insulation and limber it is fixed to and which ideally needs to be quick to set up to reduce the time of fitting, and should have some adjustability to cope with the different thicknesses and sizes of insulation and timber etc. An option is simply different sizes of products could be produced for different thicknesses of insulation which will quickly fit over the rafter and set the depth and fix the insulation in place all by one person - job done. There are different methods of creating an adjustable fixing and this would be a fixing with two or more separate parts and different types of sliding parts that join together or interlock at the final point of adjustment required by the user and could have some sort of measurement fixing scale to set the depth of the fixings. There are also rafters of metal and plastics and rafters or studwork that have a curved surface that still need to have insulation held tight against them, such as plastic exhibition tents etc. Some types of insulation are too solid or rigid to pierce with the teeth incorporated into the fixings and during installation they need the teeth moved out of the way of the body of the insulation as it is guided into the fixing to rest, so that the insulation can be unrestrictedly quickly fitted in place and then the clip clamped down on top. There could be a part of the fixing that could be hinged or that pivots around another part so that the fixing can stay in place but swivelled or moved temporarily whilst the insulation is being fitted.

There are other applications such as in garden buildings, sheds, large garden offices and even greenhouses where people are now beginning to use insulation and I found that the insulation installed where there is a stronger air flow or more wind, tends to move around and is rattled around far more, and using one clip just to overlie and retain the insulation was not enough - it needed to be clamped or held in place from both front and back or even front back and side surfaces and this is where a long continuous channel does work well in conjunction with smaller single fixings; to reduce rattle and provide more retaining strength to the overall mating of insulation and structure. What would a good idea is to have a fixing that could be one small singular fixing or an elongate channel or a combination of both fixings which could be sold as a kit etc. which is also within the scope of this invention. Also the structural timbers of these temporary buildings tended to be thinner or even made of metal or plastics materials where fixing the clips with a nail or screw wasn't always possible or the best way without risk to damaging the structure. When I tested the single clips 1 found that I needed to add on an additional flange or extend the body and bend it out of line of the main body to hook it over the fixing materials to fasten it properly. The retaining teeth work well and do go a long way to keeping the insulation still and tight against the material it is fixed to, but teeth seem to be needed to penetrate on both sides of the insulation like a dog's jaw tightly gripping a big juicy piece of meat. In a structure there are usually a run of rafters along the length of the roof and the insulation is cut and fitted between them. Usually I would use one fixing each side of the rafter to hold the insulation only on the inside of the rafter on the side of the rafter to which the fixing is attached - this means we have to use twice as many fixings than having one fixing that spans the width of the rafter and retains the insulation on *both* sides of the rafter therefore using less clips and keeping the fixings all symmetrical and installed in formal set patterns. The key to this is that the fixing needs to be formed from one main body to provide a combination of flanges, legs and arms etc. all cut from one main body that would also save material costs in manufacture and drastically reduce fitting time.

People especially workmen also like to have their jobs looking neat and good to demonstrate their skill and often the fixings are installed in formed patterns that are often symmetrical or have some 'set-out' look to them rather than just being whacked up randomly. These thought out set-up patterns of fixings also help to distribute the weight of the insulation and the fixing on the rafter more evenly and spread the retaining strength further using less fixings. Sometimes when people are insulating their lofts to be used as storage they insulate between the rafters but don't bother boarding over the insulation and then they run wires across the rafters for lights and plugs for computers and whatever else they're doing and they use wire retaining clips. This feature needs to be incorporated into an insulation fixing so that it retains the insulation and retains the wires and eliminates the need for these separate wire clips. When DIY'ers are installing insulation, often they are not skilled enough or experienced enough to cut the insulation precisely to fit and when the insulation is finally installed there are little gaps left down the edges between the rafter and the insulation which lets air, cold and damp through and, the gaps need to be sealed with an epoxy or glue or silicone etc.. By the insulation being clamped in place against the rafter from several sides the sealant can set and doesn't break or move or fall out which leads to a better job all round of keeping the heat in, whilst maintaining the air flow through the breathing gaps. Also usually two people are needed to fit large spans of insulation due to the bulkiness of it and the limited reach of one person.

What is needed to solve the problems I have further outlined is a fixing made of one or more parts, to provide a range of fixing capabilities for many different types, sizes, thicknesses, shape, density and weights of insulation and timber/fixing surfaces such as rafters and studwork, in order to adjoin the insulation to the timbers/fixing surface to retain and clamp the insulation *from two or more sides* of the insulation body and one or more sides of a rafter or fixing surface and/or to fix one piece of insulation to both sides of the timbers/fixing surfaces/materials, any combination having a means to create and/or maintain the air gap or 'stop', limit and/or that can adjust to the depth of the insulation down and against the thickness of the material it is attached to, with a means to tightly clamp the insulation in place. This fixing could be either a small clip or elongate channel or a channel formed from a contiguous or repeating pattern of a singular fixing small clip said channel that can be cut or snapped off after every pattern repetition or wherever the workman requires, to be cut back down into a number of small clips by means of a perforated portion or thinner areas within the channel so that they can be easily bent and snapped off. The fixing needs to be made in different combinations and have means of adjustability as well as other features such as retaining teeth and slots and holes for fixing, strengthening channels, arms that overlie and retain the insulation, legs that underlie or support insulation, feet that limit the depth to which the insulation may travel and flanges, all that may be cut or formed from within the main body or added as separate adjustable parts to be universal for all insulation materials. The fixing would need to be fixed to the rafter first to secure one side of the insulation whilst the person installing it can then fix the other side or insert the insulation, set the depth and breathing gap dimensions etc. and clamp the insulation in place, all in one fixing, so that it only needs one person to install it rather than two, as the fixing operates as the spare pair of hands.

According to the present invention there is provided an Combination Insulation Fixing To Retain Insulation And Set/Maintain An Air Gap Between Material Surfaces said invention comprising a main body that may be square or rectangular, that may be extended and formed as an elongate channel having at least one insulation retaining arm, leg and foot all of which can be cut from within the main body or supplied as separate pieces to the main body, said body that is generally flat and when incorporating the arm, leg and foot can be bent or formed into a jaw like clamp arrangement to clamp around and retain the insulation against the rafters or studwork from two or more sides of the insulation so that it can be fixed to one or more sides/faces of a rafter/timber/fixing surface, said jaw mechanism that is made from the combination of the arm, leg and foot that are shaped and folded or bent to follow the contour of the fixing surface and insulation. The fixing can also be made from a combination of main body that is either square shaped, rectangular shape, oblong shape, elongate or circularly shaped and with separate body parts to enable adjustability but either body type arrangement will incorporate any or all of a at least one bent or folded portion, hole, slot, apertures, perforations, strengthening channels, retaining teeth with or without barbs, teeth with apertures, teeth with slots, adjustable parts, adjustable legs with or without feet, pivoting parts, feet, feet with hole/s, feet with slot/s, feet with retaining teeth, detachable feet, an arm with retaining teeth, a leg with retaining teeth, hinged parts, flanges, prongs, an ankle piece or foot-ankle unit. Any of these features which are formed from within, on or around the main body and allowing the invention to be used in a variety of ways/combinations such as having the means to hook the invention main body over two or more sides of a rafter/studwork/fixing surface (fixing surface such as a steel joist or lintel or cylindrical elongate batten) by the use of one or more flanges or extension body piece/s that are bent out of alignment of the main body and can also be bent or shaped to follow the contour of the different shapes and sizes of body of the rafter/studwork and insulation One alternative version that can be made from the invention is a mirrored design or symmetrical shape or double sided design that has the central main body portion positioned over the front rafter/fixing surface/studwork with one or more insulation retaining, 'stop' pieces such as arms, legs and clamping parts that extend from *both* sides of the main body to encapsulate the top, side and bottom edges or surfaces of the insulation material on each side of the rafter/studwork therefore reducing the number of fixings needed, as one fixing could retain two insulation boards - one each side of the rafter. When the body is made of two or more pieces it has a means of adjustment such as an adjustable arm or leg or foot or either of, to adjust the depth of the 'stop' means making the fixing more universal for all types and thicknesses of insulation and dimensions of rafters and studwork etc. The clamping arrangement could be described as a clamp having a neck and a jaw where the neck is adjustable to move the jaws closer together or further apart or where there is an arm and a claw where the length of the arm is adjustable to move the claws closer or further. A further modification of the main body is where the main body is drawn out or made elongate and formed into a channel to fit over the rafter or to the inside of the rafter. The basic invention formed as a small clip is also a duplicated or repeated in pattern to form an elongate channel version. The invention eliminates the need to use any additional fixings other than the invention and therefore reduces the cost of retaining the insulation and speeds up the fitting time, whilst also making the job of installing insulation do-able by one person rather than two.

The invention will now be described herein and with references to the accompanying drawings in which:
Figures 1 and 2 on page 1/30 show the basic invention in perspective having a main body, a leg a foot and an arm.
Figures 3 and 4 on page 2/30 show the invention as on page 1 with strengthening channels Figure 3A on page 2/30 show strengthening channels around the outer periphery of the body.
Figure 5 on page 3/30 shows the invention as depicted in the previous pages 1 - 2, having insulation retaining teeth.
Figure 5A on page 3/30 illustrates the breathing gap between the insulation and membrane in the roof structure and the insulation and plasterboard - therefore two separate breathing gaps can be created by the invention.
Figure 5B on page 3/30 shows how the invention can have an adjustable arm and an adjustable leg to vary the distance between the two breathing gaps.
Figures 6 and 7 on page 4/30 show the invention from the front and side aerial views with strengthening channels and retaining teeth.
Figure 7 on page 4/30 also illustrates that the strengthening channel does not have to be a complete channel and may travel around only a portion or portions of the invention.
Figure 8 on page 5/30 shows the invention where the body has been extended into a channel and having two insulation retaining arms.
Figure 9 on page 5/30 shows a sectional view of Figure 8.
Figure 10 on page 6/30 shows the channel version of the invention as a symmetrical channel with arms and legs each side of the channel.
Figure 11 on page 6/30 shows a sectional drawing of Figure 10.
Figures 12 and 13 on page 7/30 illustrate how the invention in its basic version attaches to a timber. Figure 12 is from the front where the main body sits on top of the timber and Figure 13 shows the invention from behind having a back flange bent at a 90 degree angle to overlie the back of the timber as well as the top for better fixing.
Figure 14 on page 8/30 1-3 demonstrates how the fixing is attached to the timber, the insulation installed and then the fixing finally fixed in place to retain the insulation.
Figure 15A-C on page 9/30 shows how different sizes of fixing can be made to retain different thicknesses of insulation.
Figure 16A-B on page 10/30 shows how the retaining arm can be cut from within the confines of the main body plate which is adapted to incorporate the leg and foot and shows the additional flange.
Figure 17 on page 11/30 shows the invention with a curved body and leg and bent into a curve flange to fit to a circular material and retains a separate wire to the fixing.
Figure 18 on page 11/30 shows a side aerial view of a curved body and leg version attached to a cylindrical material with an additional smaller side flange added to the body that is bent into a curve to hold the wire.
Figure 19 on page 12/30 shows a symmetrical version of the invention with one main body but having two arms and two legs and two feet with one strengthening channel only around the arms and body, fixing holes and retaining teeth.
Figure 19A on page 12/30 shows a retaining tooth having a slot in it.
Figures 20 - 21 on page 13/30 shows the symmetrical version having the wire retaining flange and how it works attached to a timber and shows the breathing gap.
Figure 22A-D on page 14/30 depicts symmetrical version for square and circular timber and single sided versions with curved and straight bodies and legs and how they all fit to the material.
Figure 23 on page 15/30 shows the channel version with a wire retaining flange cut from within the main body and retaining tooth.
Figure 24 on page 16/30 shows a single sided channel multiple arm/leg version with a side wire retaining flange and perforation area to make the arm easier to bend.
Figure 25A-F on page 17/30 shows several combination side sectional versions of the basic invention having flanges, teeth, feet and legs in different positions on/in/around the main body.
Figure 26A, A1 & B show both a concave and convex strengthening channel that may also be formed from a flange cut within the arm/body/leg.
Figure 27A-E on page 18/30 shows an arm with a retaining tooth, an arm with a retaining tooth and strengthening channel, an arm with multiple retaining teeth within the periphery of the arm, an arm with a retaining tooth around the outside of the arm, an arm with slotted hole, an arm with a wire retaining flange and an arm with a slot.
Figure 28 on page 19/30 illustrates how the arm can be cut from within the leg and can be extended by cutting it from within a portion of the leg AND foot.
Figure 29A-E on page 20/30 shows several examples of manufacturing templates with all the features for both single sides and double sides basic invention.
Figure 30A-B on page 21/30 shows two examples of manufacturing templates of the channel and duplicate versions of the invention.
Figure 31A-I shows different legs with a foot having combinations of the wire flange, teeth, holes, slots and strengthening channels.
Figure 32A-C shows layout patterns of the invention in situ with and without retaining wires to timber.
Figure 33 on page 24/30 shows a leg of the invention having a plurality of prongs and perforated marks for the purpose of fixing into an adjustable foot not shown.
Figure 34 on page 24/30 shows the main body having an additional extension piece between the body and leg to allow the leg to protrude outwards from the fixing timber to create a gap for an adjustable foot to encapsulate the leg and travel up and down the leg without being blocked or restricted by the timber.
Figure 35 and 35A on page 24/30 shows how the leg may be extended manufactured longer so that it can be bent around the timber on two or more sides to clamp in the retaining foot (not shown) and be universal for different thicknesses of timber.
Figure 36A-F on page 25/30 shows different versions of horizontal and vertical legs and feet with different features and a foot formed into a channelled foot.
Figure 37A-D on page 26/30 shows the channelled foot and the pronged leg and how these two make the leg and foot adjustable for different thicknesses of timber and insulation.
Figure 38 on page 27/30 shows how a measurement scale can be printed on the leg to set the adjustable leg to the thickness of the insulation.
Figure 39 on page 27/30 shows how the leg can have a flange cut within the leg and bent out of alignment of the leg to allow an adjustable foot, a foot-ankle piece or additional leg with foot may be attached to make it fully adjustable.
Figure 40 on page 28/30 shows a symmetrical version adapted to embrace a diamond shaped material.
Figure 41A-C on page 28/30 shows alternative versions of the main body that have from one to three flanges and a wire retaining flange.
Figure 42A-B on page 29/30 shows the invention with a hinged arm and how it works when attached to the timber.
Figure 43 on Page 29/30 shows a square main body.
Figure 44 on Page 30/30 shows a version of the invention having a Y shaped arm.
Figure 45 on Page 30/30 shows the leg and foot being joined with a hinge mechanism.
Figure 46 on Page 30/30 shows a main body being circular and having an arm and a leg.
Figure 47 on Page 30/30 shows a leg having multiple channels/sockets to house an ankle piece.

### With reference to the drawings:

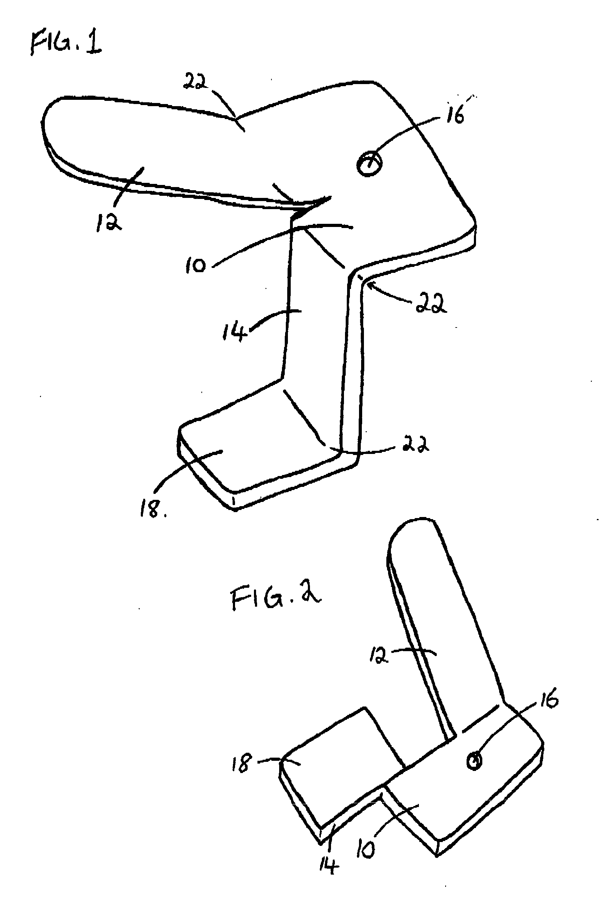

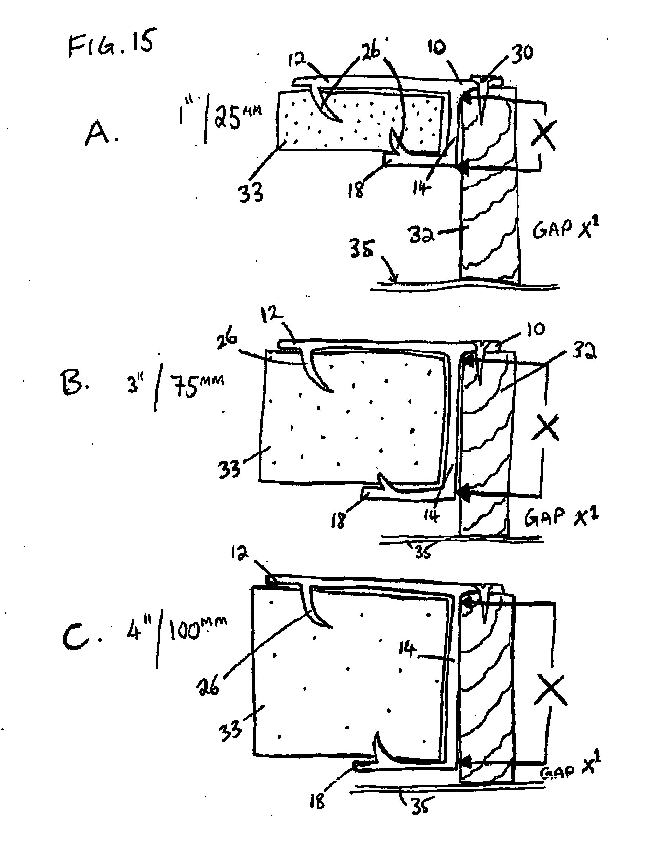

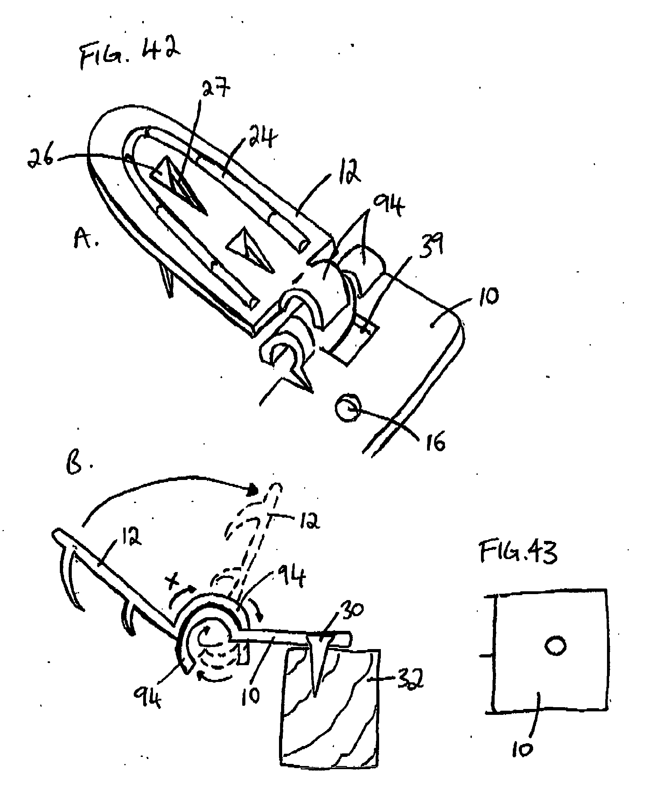

Figures 1 and 2 on page 1/30 show the basic invention in perspective having a main body 10, a leg 14, a foot 18 and an arm 12. The main body 10 is a flat rectangular shape body having a hole 16 to receive a nail or screw, not shown, to attach the main body to a rafter or timber and so on, an insulation retaining arm 12 extending from one side of the main body 10 adjacent to an insulation supporting leg 14 that has an insulation supporting or depth limiting foot 18 also extending from the same side of the body as the arm, said arm and leg having being bent out of alignment (generally the arm upwards and the leg downwards) of the main body at points 22 where the main body ends and the arm and leg begin, in order to bend over and/or around the surface/s of a rafter or timber and piece of insulation, with the arm overlying the top of the insulation and the leg and foot underlying the insulation, so that the insulation is sandwiched and clamped in between the arm and leg when fixed, said arm and leg which both extend from different portions of the main body and that are formed to extend to an upper and lower position of the left side of the main body in order to enable the invention to be made from one piece of material having a series of cuts and bends in it to form the invention in a variety of ways as illustrated on pages 20 of 30 and 21 of 30 from one main plate which makes manufacturing the product cheaper and simpler. The back of the leg 14 would lie against the inside of the rafter and the front would fit against the insulation (shown on page 9/29 Figure 15) with the foot 18 fitting underneath the insulation and supporting the insulation from below and acting as a 'depth stop' to stop the insulation moving further inwards or backwards along the depth of the rafter and towards the roofing membrane, therefore creating or maintaining the breathing gap for the air flow etc. What this arrangement of arm leg and foot also do is allow the insulation to be fitted by one person - the invention is fixed to the rafter, the insulation is then pushed in and whilst held in place with one of the user's hands and pressed against the foot of the invention the other hand can then push the insulation retaining arm down on top of the insulation and clamp it in place so that the user can then carry on to fit other fixings etc. to finally secure the insulation. The main body 10 may also be square as shown in Figure 43 on Page 29/30.

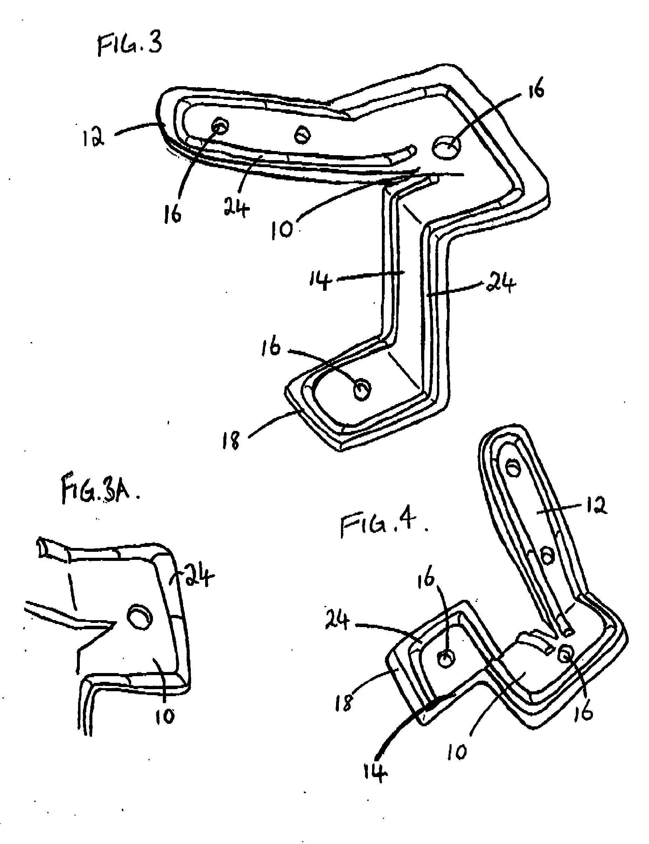

Figures 3 and 4 on page 2/30 show the invention from the same perspective as in Figures 1 and 2 but show the invention having a fixing hole 16 in the foot 18 and multiple fixing holes in the arm 12 as well as strengthening channels 24 running around the periphery of the main body 10, arm 12, leg 14 and foot 18 for added strength to the overall invention as it generally needs to be made from thinner material to reduce weight upon the structure. The strengthening channels 24 can run around the outer periphery as shown in Figure 3A on page 2/30 and follow the shape of any parts of the body and do not necessarily have to be around every part but can also run around just inside the edge of the parts as shown in the other drawings on page 2/30. The strengthening channel 24 can be continuous without any breaks or ending or it can have breaks and can be positioned only where additional strength is needed.

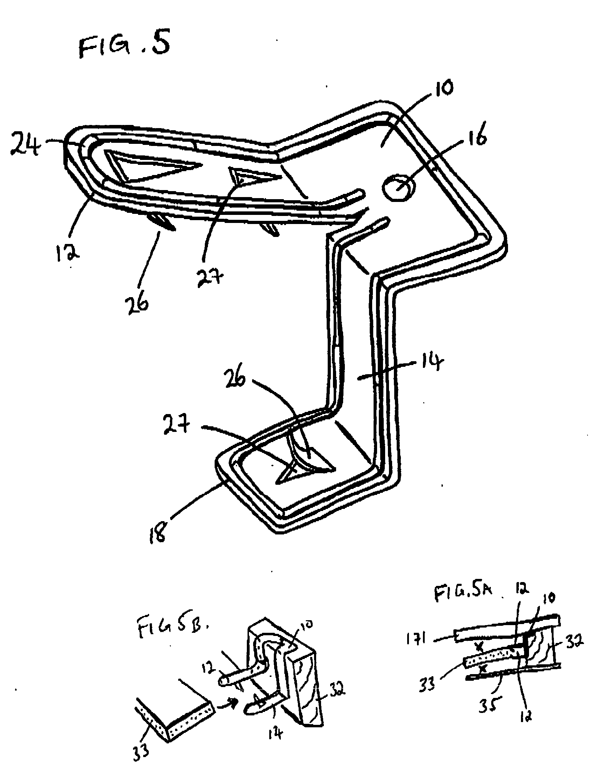

Figure 5 on page 3/30 shows the invention from the same perspective as in Figures 1 and 3 this time having strengthening channels 24 as well as insulation retaining teeth 26 on the arm 12 and the foot 18 cut from within the confines of these parts leaving an aperture 27 in the material from where the tooth was cut. The retaining teeth bite into the insulation and apply added grip and prevent the insulation moving around within the fixing and therefore the overall structure.

Figure 5A on page 3/30 shows a sectional view of the invention in situ fixed to a rafter 32 and clamping a piece of insulation 33 and holding the insulation sandwiched between a piece of plasterboard 171 sat on top of the rafter 32 and the roof membrane 35 lying underneath the rafter 32, where 'x' is the breathing gap or just a gap for wires etc. created and maintained by the fixing and its position and the way the invention is formed with the arm, leg and foot coming off the main body as previously described.

Figure 5B on page 3/30 shows how the arm may be adjustable and/or can be bent around the contour of the rafter to become disposed at a lower position than the surface level of the rafter so that it creates the second gap between the insulation and other surface - in this instance the plasterboard (not shown).

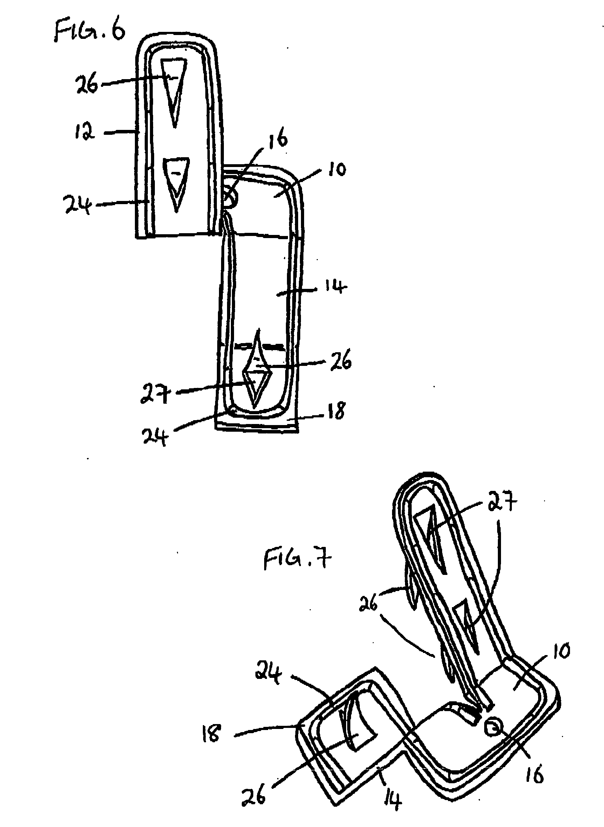

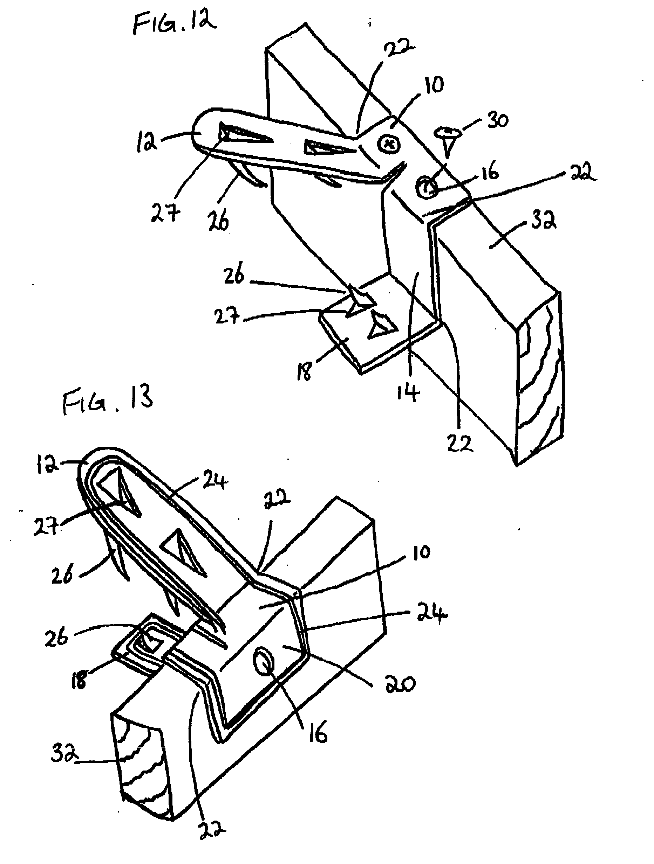

Figure 6 on page 4/30 shows the invention from the front with the arm 12 bent upwards from the main body 10 and having strengthening channels 24 and retaining teeth 26 that can been seen from the underside of the arm as it is bent upwards and the leg 14 bent downwards out of alignment of the body 10 and foot 18 bent at a 90 degree angle outwards from the leg 14 said foot having a retaining tooth 26 and strengthening channel 24. If it doesn't quite look like that it is because my drawing is awful but this can also be seen in Figure 12 on page 7/30. Figure 7 on page 4/30 shows the invention from a side rear aerial view. The foot can also be bent at other angles depending on the angle the user wishes to position the insulation and doesn't have to be precisely 90 degrees, it could be 45 degrees or 100 degree but no more than 345 degrees otherwise it would be a folded up foot!

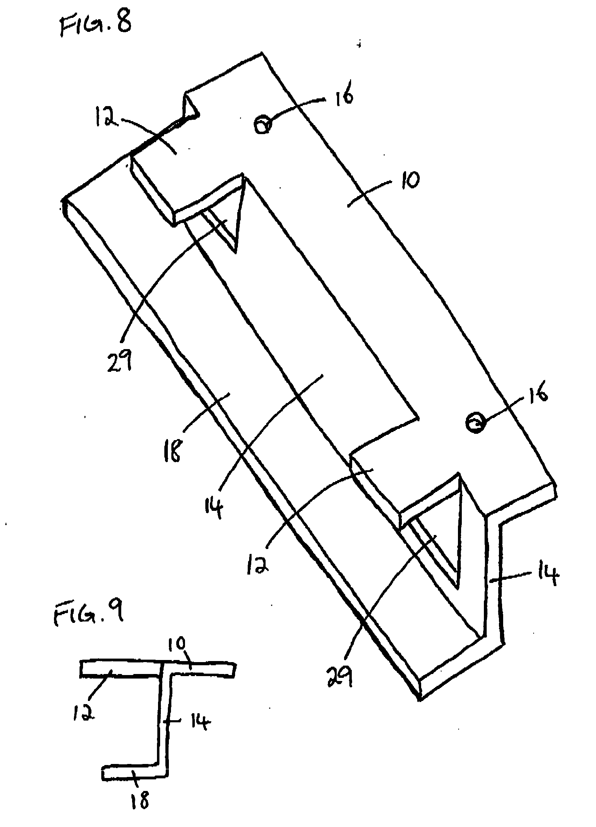

Figure 8 on page 5/30 shows the invention still comprising the same elements of an arm, leg and foot but now the body has been extended and drawn out to an elongate body 10 to form a half channel and now having two arms 12 spaced apart along the body 10 and a continuous leg 14 and foot 18 but with the arms 12 cut from within the body of the leg 14 so that they still extend from the main body 10 and the leg also still extends from the main body 10, so that the invention is now a long continuous channel fixed to one side of the rafter by a nail or screw through the holes in the body 16. There is a cross section drawing Figure 9 on page 5/30. The half channel version is still made from one main plate/piece of material. This version of the invention is like a repeated pattern or contiguous pattern and the channel could be cut in half to make two small individual fixings again all still having a main body, arm, leg, foot etc. and other components as chosen from a selection.

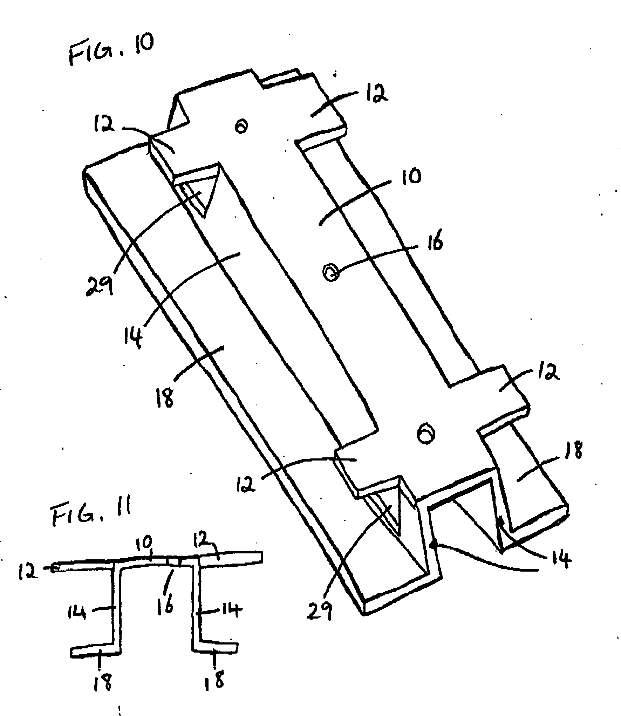

Figure 10 on page 6/30 is a full channel version that is symmetrical that would fit over the top facing length of the rafter and would retain insulation on both sides of the rafter therefore using less fixings and keeping the job looking neat and symmetrical. This Figure shows the channel having the main body with arms and legs protruding either side of it again with the legs having feet and can still be cut and formed from one main plate. Again this could be cut in half and would become one smaller whole fixing again. Figure 11 shows a sectional drawing of the full channel shape.

Figure 12 on page 7/30 now shows the basic invention having retaining teeth 26 fixed to a rafter 32 to show how the main body 10 is fixed on top of the rafter 32 with a nail or screw 30 via the holes 16 in the main body 10 with the leg 14 bent at a 90 degree downward position of the main body 10 to bend around the inner side face of the rafter 32 and the foot 18 bent outwards away from the leg 14 at another 90 degree to the leg 14 to support and underlie the insulation, not shown, whilst the arm 12 is bent upwards from the main body 10 at the opposite direction to the leg 14 so that this arrangement is like an open jaw ready to receive and clamp the insulation.

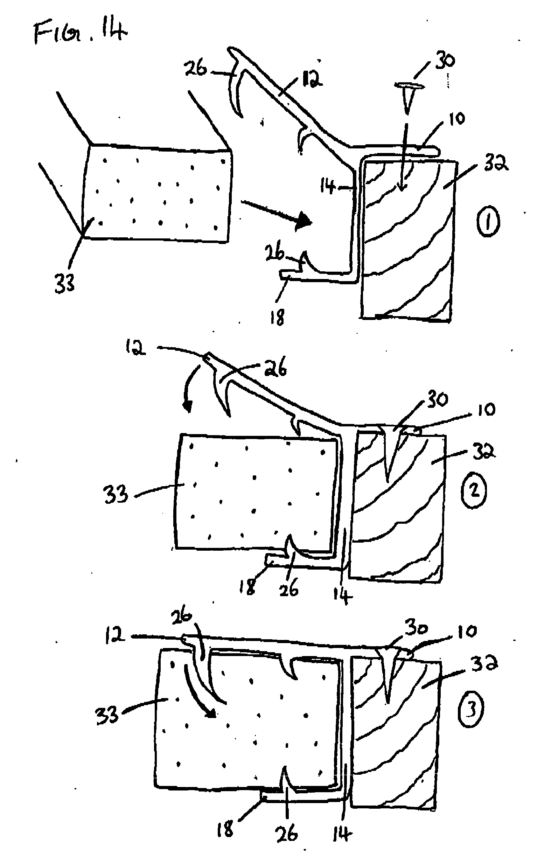

Figure 13 shows the invention from behind fixed to the rafter but now comprising an additional flange 20 extending from the main body 10 on the opposite side of the body to the arm and leg and also bent at an angle out of alignment to the main body so that the fixing can bend over and encapsulate the other inner side face of the rafter again meaning the main body, flange and leg are forming a channel over the rafter. Figure 14, steps 1-3 on page 8/30 illustrates from a sectional/side view how the invention is fitted to the rafter and receives and fixes the insulation: Step I shows the invention fixed to the top of the rafter 32 by a nail 30 inserted through a hole in the main body 10 down into the rafter 32. The leg 14 is shown bent downwards from the main body 10 to follow and lie against the insulation 33 facing inside face of the rafter 32 and the foot 18 having a retaining tooth 26 is bent at an angle outwards from the leg 14 to hold the insulation when it is fitted. The arm 12 having retaining teeth 26 is bent upwards from the body so the jaw type arrangement is open ready to receive the insulation 33 that will move into the jaws as shown by the black arrow. Step 2 the insulation 33 is now moved into position between the arm 12 and foot 18 and is sat on the foot 18 pressing against the leg 14 that lies against the side of the insulation 33 so now the insulation is encapsulated from three sides: the bottom, side and top and has been pushed onto the retaining tooth 26 within the foot 18 for added grip. Step 3 and the arm 12 having retaining teeth 26 is now pushed down onto the insulation so the teeth 26 pierce the insulation and the insulation is now clamped in place against the rafter via the invention. If the invention is made of metal or metals materials when I say the arm is pushed down, it would effectively mean the arm is bent downwards, but could be manufactured in the open position so that the user simply bends it down himself, this way the arm is out of the way of the insulation and the user doesn't have the hassle of bending it or opening it - it is already done for him.

Figure 15A-C on page 9/30 illustrates.the importance of the leg and how it works with different thicknesses of insulation. In Figure 15A-C the invention is fixed to the rafter as previously described in Figure 14, clamping the insulation between the arm and foot of the invention. The leg 14 has the job of attaching to the foot 18 and is the medium or 'spacer' or 'spacing means' between the foot 18 and main body 10 so that the foot 18 can underlie and support the insulation 33 and also limit its position in height against the rafter 32 through the leg and foot working as one mechanism, but the leg also acts as the means to create and maintain the breathing gap between the underside of the insulation and the top of the membrane depending on how long the leg is compared to the thickness, or in correlation to the thickness of or height of the rafter, and therefore the leg is highly important as it can be manufactured in set dimensions /heights to match the thickness of the insulation, or it can be shorter or adjustable (described later), so that it sets the minimum and maximum distance between the top and bottom of the rafter. The adjustable leg would mean the breathing gap can be determined by the user by setting the distance of the leg and foot. From a product and ease of use point of view, if there were 3 thicknesses of insulation of say 25mm, 75mm and 100mm, there could be three different products having different lengths of leg to correspond with each size of insulation so there would be a leg 25mm long, a leg 75mm long and a leg 100mm long - therefore setting these 'jaw' distances between the arm and foot at point of manufacture so that if the user knows their insulation is 75mm thick, they buy a pack of fixings having a 75mm long leg, fit it to the rafter and pop in the insulation that would fit precisely - job done. This would mean there are a multiple number of different products but it would be very easy to use the invention. The adjustable leg (described later) would mean there is only one product for sale where it could be adjusted by the user to fit any thickness of insulation and the user would be without doubt that it would fit, the only difference being it may be more time consuming to set each fixing but as there are different markets ie: contractors and DIY'ers it may mean adjustable and non-adjustable versions are sold to suit each target market. Going back to the drawings Figure 15A-C this scenario of the non-adjustable version is illustrated from a side/sectional view: In each drawing A, B and C there is a rafter 32 stood on top of a membrane 35 with the invention 10 fixed on the top of the rafter 32 by a nail 30 through the main body 10. Each drawing shows the insulation 33 clamped between the arm 12 and foot 18 of the invention that are spaced apart by the leg 14 marked X in each drawing. In each drawing A-C the height of the leg increases in correspondence with the increasing thicknesses of the insulation fitted into the fixing in each drawing and as the distance X increases or gets wider, the breathing GAP (xl) between the bottom of the foot 18 and the surface of the membrane 35 decreases therefore demonstrating how the leg and jaw arrangement works to set a breathing gap between the membrane and top of the rafter. So in a formulae, X + xl = the height of the rafter as the top of the leg is flush with the top of the main body and the bottom of the leg adjoins the bottom of the foot. I'm not a scientist or mathematician - this is just trying to explain it and even that is probably incorrect but I think I've made the point that the leg can be made to fit any dimension of insulation!

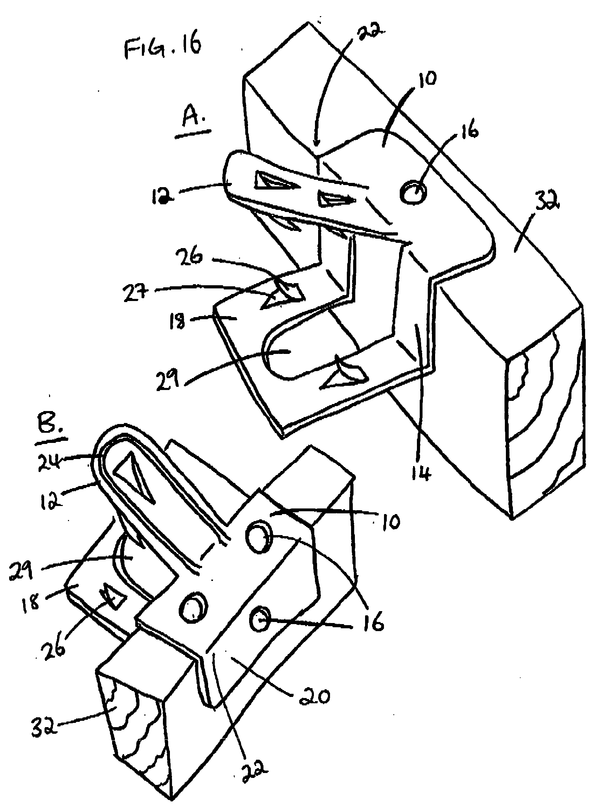

Figure 16A-B on page 10/30 shows another version of the basic invention having a main body 10, arm 12 and leg 14 and foot 18 with retaining teeth 26 and a hole 16 but where the arm 12 is cut from within the confines of the body of the leg 14 and foot 18 but the base of the arm 12 still extends from the main body 10 this is so that effectively there are two legs and two feet - one each side of the arm and joined at the feet so that the insulation is supported from each side of the arm and not just one side therefore making the fixing stronger to also spread the load of the insulation on the fixing - two legs better than one. Drawing B shows this version of the invention from the rear having the additional flange 20 to hook over the other side of the rafter. There is a bend 22 between the flange 20 and main body plate 10. There are also two holes 16 in the main body 10 and one hole 16 in the flange 20 demonstrating that the main body or flange can have one or more holes, or the body may have no holes whilst the flange has a hole etc. - different combinations to make the fixing suit a wider range of applications.

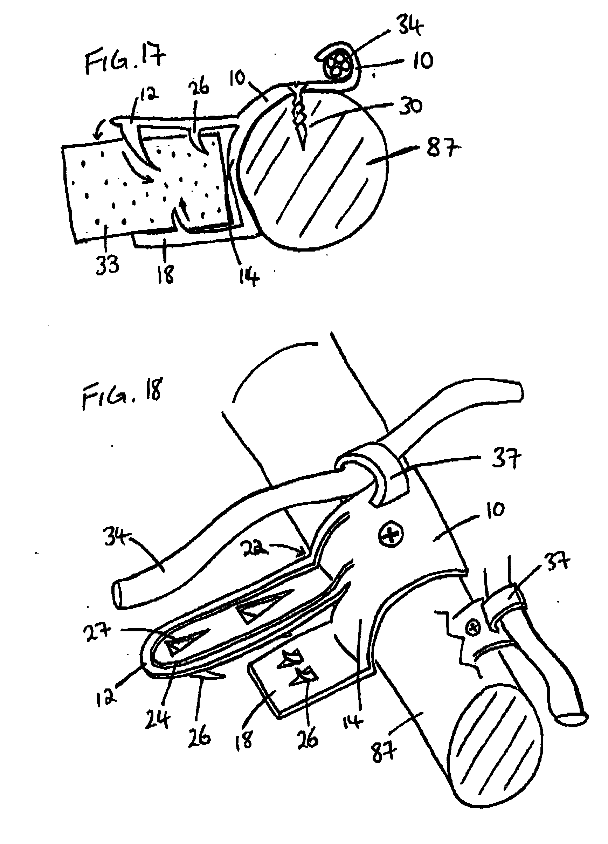

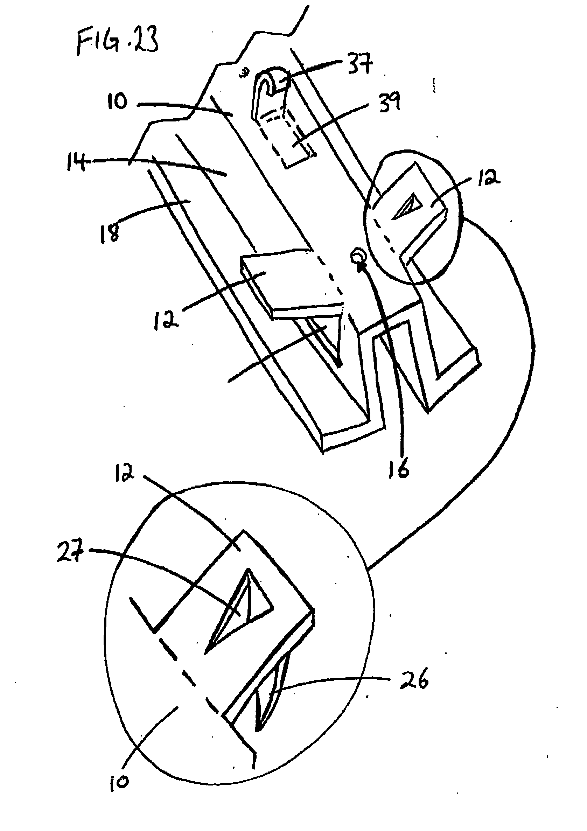

Figure 17 on page 11/30 shows another alternative version of the invention having a main body 10 and curved leg 14 both that are curved to fit/follow the contour/shape of a portion of one side of a curved batten 87 so that an insulation material 33 can still be fitted to a curved surface via the curved fixing. The body has a portion that is curved upwards almost into a full circle - from the sectional drawing it looks like a tail opposite the arm and leg and of the main body - this portion being used to house a wire 34 so that the fixing 10 can retain a piece of insulation 33 and also a wire 34 so it eliminates the need for separate wire fixings. Figure 18 also on page 11/30 shows the invention from a side aerial view fitted to a batten 87 having a curved body 10 curved leg 14 and an additional 'wire flange' 37 said flange also curved around the outer shape of the wire 34 to retain the wire to the fixing which is fixed to the batten 87 by a screw through the hole in the body. The flange 37 may be positioned anywhere around the main body 10 and can even be cut from within the main body as shown Figure 23 on 15/30 so that the wire 34 or whatever the flange is being used for can be positioned multi directionally.

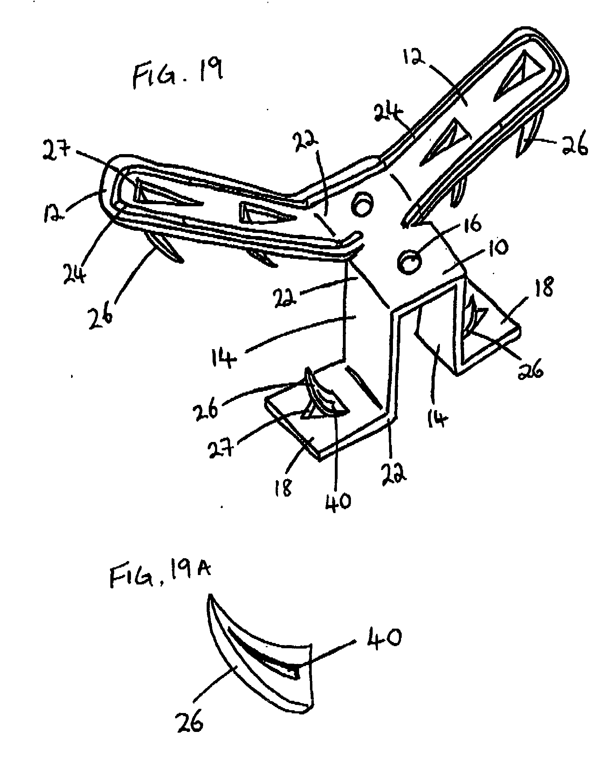

Figure 19 on page 12/30 shows the invention as a symmetrical double version where there is the main body 10 having a pair of arms 12 extending one from each side of the main body 10 and bent upwardly and a pair of legs 14 one leg extending from each side of the main body 10 and bent downwards each leg having a foot bent away from the leg said arms 12 having strengthening channels 24 and retaining teeth 26 said main body having one or more holes 16 to receive a nail or screw not shown and said feet 18 also having one retaining tooth 24 each for the invention to fit over the top of the rafter and retain a piece of insulation each side of the rafter therefore again reducing the number of fixings required. The invention could be sold as a kit with several versions and/or sizes of the same invention in the kit where users may need to complete a variety of insulation tasks in the loft and where there may be rafters or timbers at different angles or edges where just one version wouldn't be varied enough for the purpose ie: if there is a starting rafter at the edge only the single sided version would be used but then the rafters in the middle would need the symmetrical or double version and then there may be extremely long rafters that need the long channelled or L shape continuous channel version and so on - one side may have wires and need the wire retaining option etc., all of which can be achieved through the same invention and all manufactured out of one main plate.

Figure 19A shows the retaining tooth 26 having a slot 40 in it. This slot may be used to tie string through if one needed to tie a string between fixings etc., and for extra grip on the insulation.

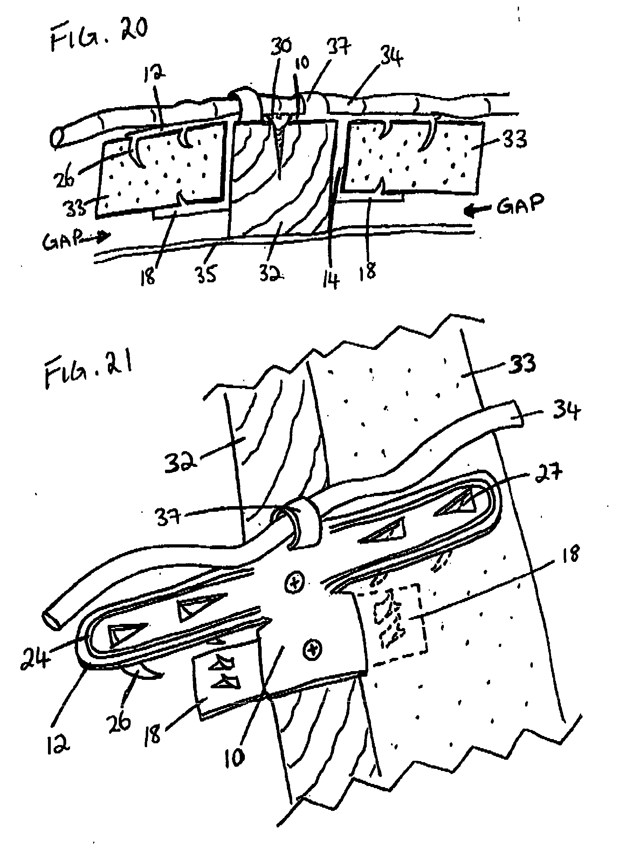

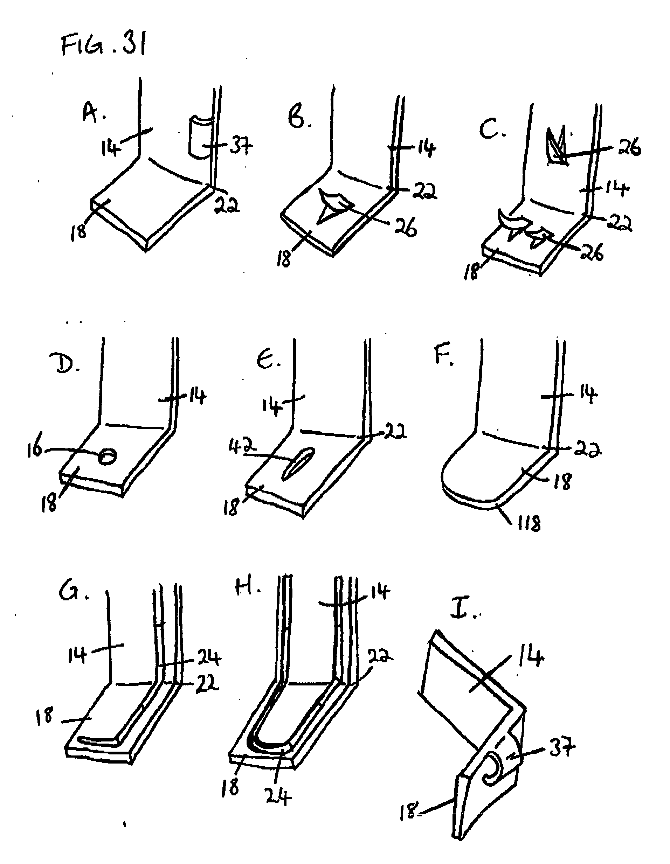

Figures 20 and 21 on page 13/30 show how the symmetrical version works from a sectional view and a front side plan view: Figure 20, section view shows the symmetrical version with the main body 10 fitted over the top of the rafter 32 that is sat on top of the membrane 35 and the arms 12 extend outwards from the main body to overlie the insulation 33 and the legs 14 extend downwards attached to the feet 18 that hold the insulation 33 from underneath and the leg 14 creates the breathing GAP, depth stop or limit to keep the insulation 33 positioned towards the top of the rafter 32, there is one piece of insulation retained on each side of the rafter within the same fixing. There is a channel formed in the invention by the symmetry of the arms and legs of the fixing that fits over the rafter. The main body has two wire retaining flanges 37 that are retaining the wire 34 to the fixing across the top of the rafter and insulation as shown in Figure 21. The arm and foot shown on the right side of the fixing in Figure 21 pierce the insulation as shown and the wire is fixed by the fixing so that it runs across the top of the insulation and rafter. The foot 18 may also have a wire retaining flange in case the user needs to run a wire above and below the insulation as shown in Figure 31(I) on page 22/30.

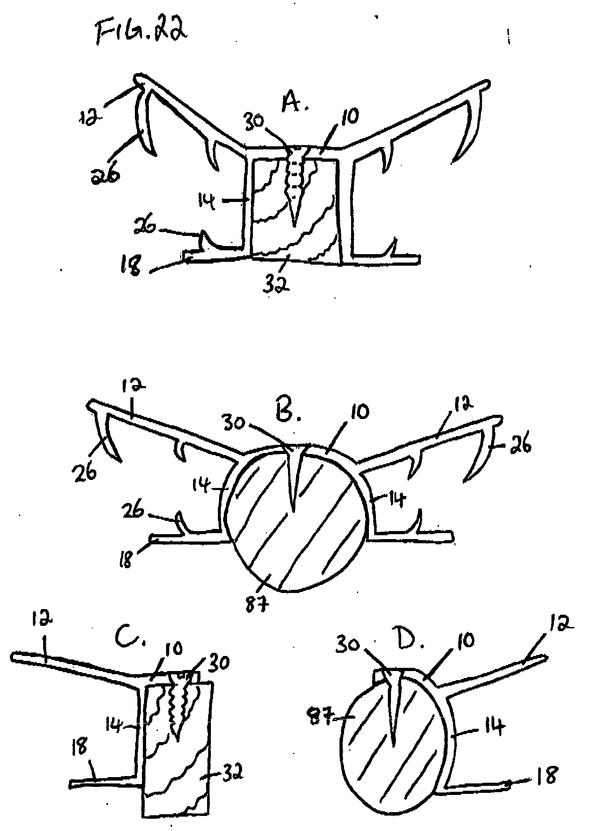

Figure 22A-D on page 14/30 shows sectional views of the invention in both symmetrical versions and single sided versions fitted to both square and circular timbers illustrating the adaptability of the invention. The main body and/or leg can be shaped to fit around the outer surface on one or both sides of whatever it is being fixed to and the arms 12 don't have to be the same length as the foot or extend away from the main body the same distance as the foot; either the arm or leg can be longer than the other or the reach out to the same distance over and below the insulation. Generally the arm is longer as the foot is more of a limiting or stop piece and therefore doesn't need to be as long as the arm as usually more than one fixing will be used around one or more sides of the insulation to clamp it in place. These drawings on page 14/30 illustrate any version of the invention may or may not have retaining teeth; a variety of products can be manufactured with or without them for different types and densities of insulation. Nails or screws can be used to fix the invention as shown.

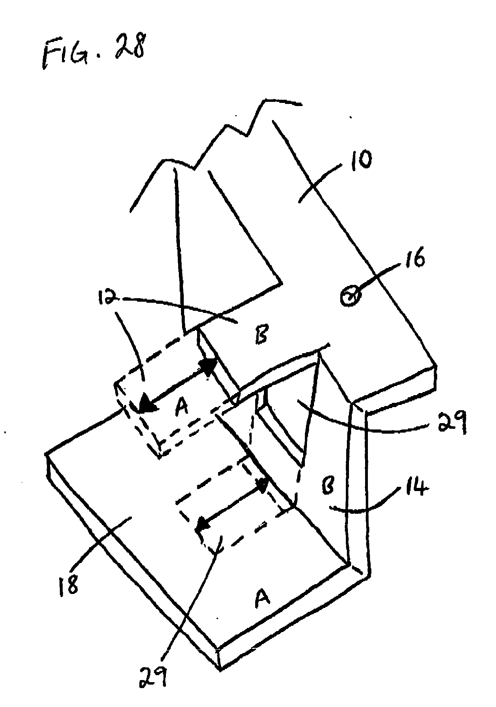

Figure 23 on page 15/30 shows another combination of the invention wherein the main body 10 is drawn out as a channel, has a wire retaining flange 37 cut from within the main body and leaves an aperture 39 where the wire could fit through if the timber was drilled below it - often electricians drill or chip into timbers to create channels for the wires to pass through below the surface of the timber for building standards and safety. This drawing also shows the arm having a retaining tooth 26 in the enlarged part of the drawing in the circle. Another important part of this drawing shows that the arm is cut from within the leg only and not the leg and foot as shown in the other drawing; this is because the arm is shorter and by cutting through the leg *and foot* to form the arm makes the arm longer as there is obviously a longer piece of material if laid out flat as clearly illustrated/shown in Figure 28 on page 19/30 -the extended portions marked as 'A' on the drawing, extended from the 'B' standard part.

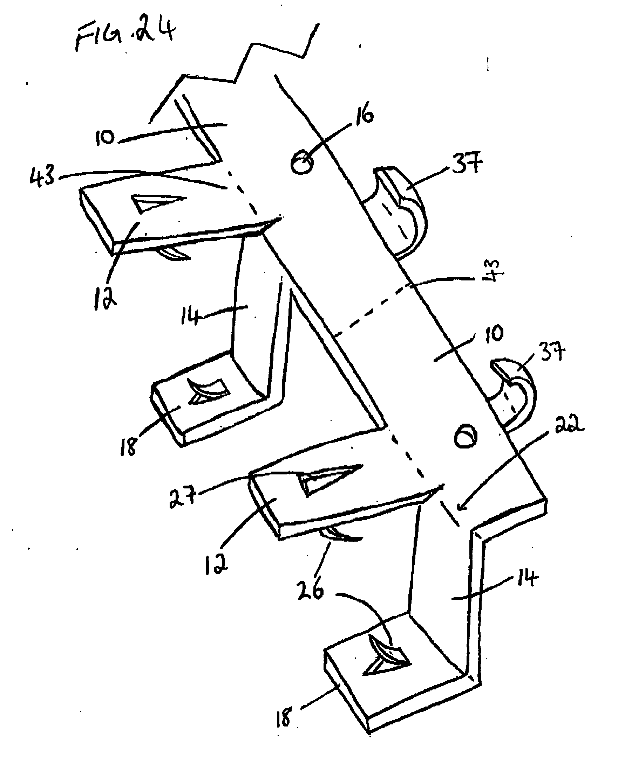

Figure 24 on page 16/30 shows the half channel version with the contiguous or repeated pattern of arms and legs and elongate body and the perforated line marked 43 show where the body can be snapped off/in half to become once again the singular one sided version; this is because the invention could be manufactured as a continuous channel with a repeated pattern so that any number of fixings could be snapped off by the user or they could have one long channel and one or two fixings to become a combination invention.

The full channel symmetrical version works in the same way. In this example the wire could be clamped all the way along a long channel version with multiple wire retaining flanges and the insulation would be supported at multiple points with the use of the multiple arms and legs all extending from the one main body.

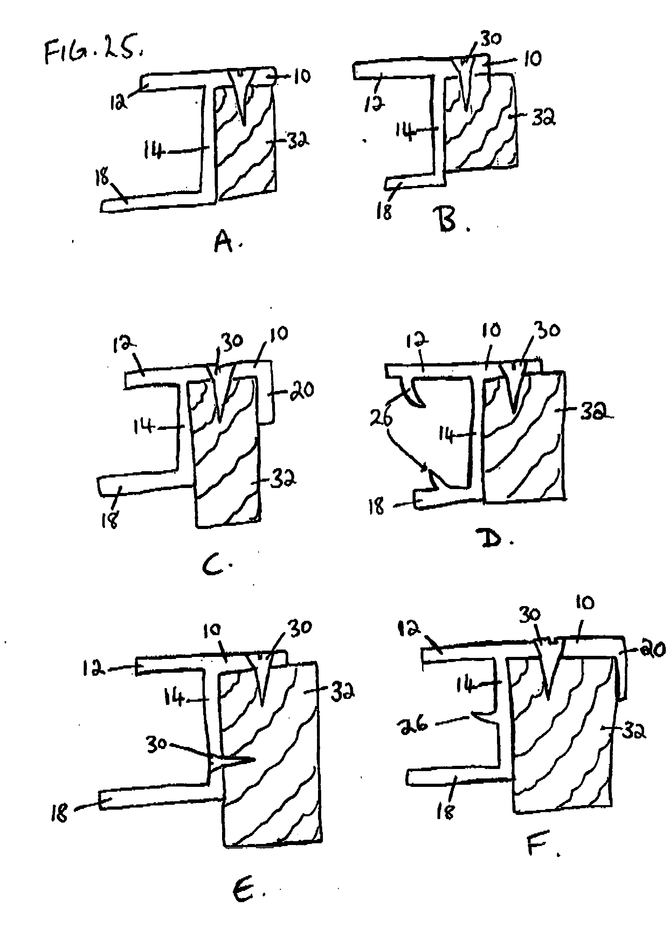

Figure 25A-F on page 17/30 shows that the invention overall may have arms and feet that are longer or shorter than one another or the same size and may have holes, retaining teeth or extra flanges in any combination; holes on the arms, body, legs, feet, flanges, teeth on the arm/s, leg/s, flange/s, feet and longer or shorter legs and so on.

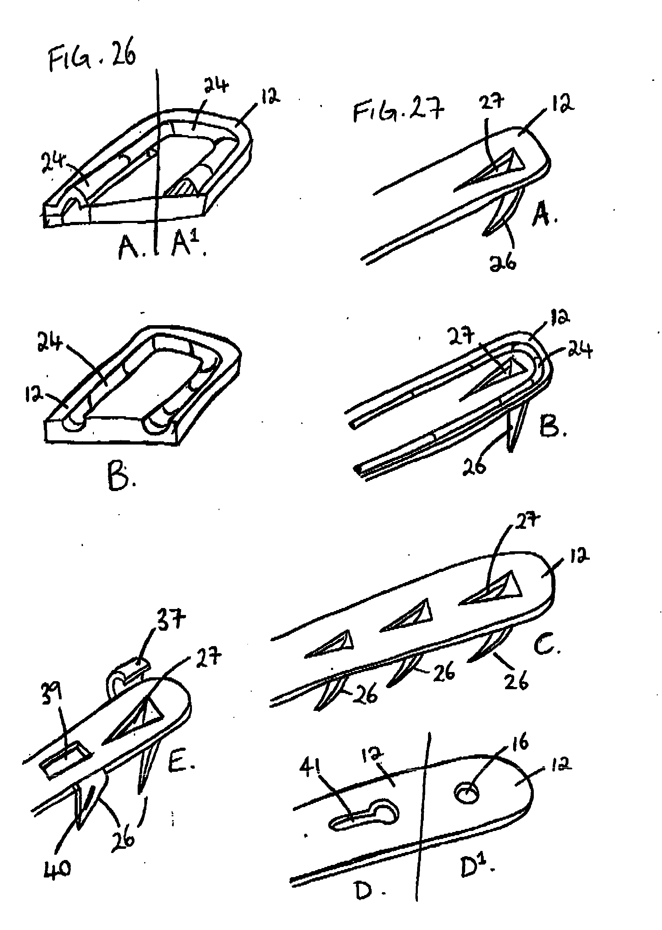

Figure 26A, A1 and B show a variety of ways the strengthening channels may be formed. In A the channel may be cut on one side from within the material and bent out as a curved continuous flange. In A1 the channel may be convex and protruding out from the material and in B the channel may be concaved and formed into the material the channel.

Figure 27A, B, C, D, D1, E on page 18/30 shows the arm may have combinations of number of teeth, strength channels, either holes or slotted holes, apertures, retaining flanges, teeth within the body of the material, teeth around the periphery of the material and so on. A is an arm with a retaining tooth. B is an arm with a retaining tooth and strength channel, C is an arm with multiple CURVED retaining teeth, D shows an arm with a slotted hole, D shows an arm with a normal round hole, E shows an arm with a combination of an aperture, a STRAIGHT retaining tooth inside the edge, retaining flange, retaining tooth around the edge WITH A BEND IN IT etc. I have not drawn all the hundreds of combinations.

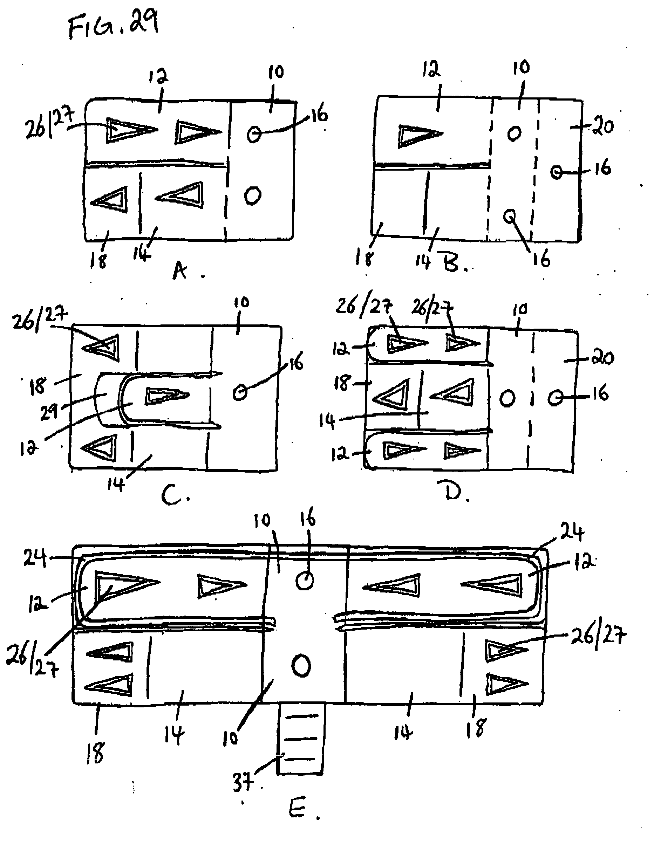

Figure 29A-E on page 20/30 shows samples of possible plan views of flat manufacturing templates that can be cut folded and bent etc. to make a variety of alternative versions of the *singular* invention both one sided and double sided and/or symmetrical versions. Again I have not drawn endless examples and combinations but the point of these drawings is that they highlight that all the combinations can be made from one piece of material with the exception of the hinged and adjustable versions shown and described later. Figure 29A shows the invention with a main body 10 having a fixing hole 16 with an arm 12 and leg 14 extending from the left side of the main body the leg having a foot and both the arm and leg having retaining teeth 24. Note the lines and perforated lines represent cut or fold marks and the teeth can face in opposite or reverse directions so that the teeth may either all face the same way when the invention is formed from the template or they may face opposite ways to bite into the insulation for different gripping patterns etc. Figure 29B shows the body with the additional flange 20 also having a hole 16 and this time the leg and foot do not have any retaining teeth only the arm does. The main body 10 has two holes 16. Figure C shows a template where the main body 10 has two legs 14 joined together by the feet 18 and having the arm cut from within the material plate in between the two legs so that the feet are joined by the remaining material so when folded the legs and feet are one whole unit. Note the cutting marks around the arm extend into the main body - this is because when the material is folded the cuts extend slightly further past the line where the arm joins the body so that it is easier to press the arm out without bending the material around it, for a better made product and a larger range of movement for the arm. Only the arm and feet have retaining teeth in this template. Figure D shows the invention made from one main plate having two separate legs having feet positioned one each side of a central arm but still both legs and arm extend from the main body that has a additional flange on the opposite side of the body. Both legs, feet and the arm have retaining teeth. Figure E shows a template for a symmetrical version of the invention having the main body 10 centrally located between the pairs of legs 14 and arms 12 where one leg and one arm extend from both sides of the body to form the double or symmetrical version that sits on top the rafter and retains insulation on both sides of the rafter and encapsulates each piece of insulation from two or three sides. The main body also has a wire retaining flange 37 extending from the bottom of the body.

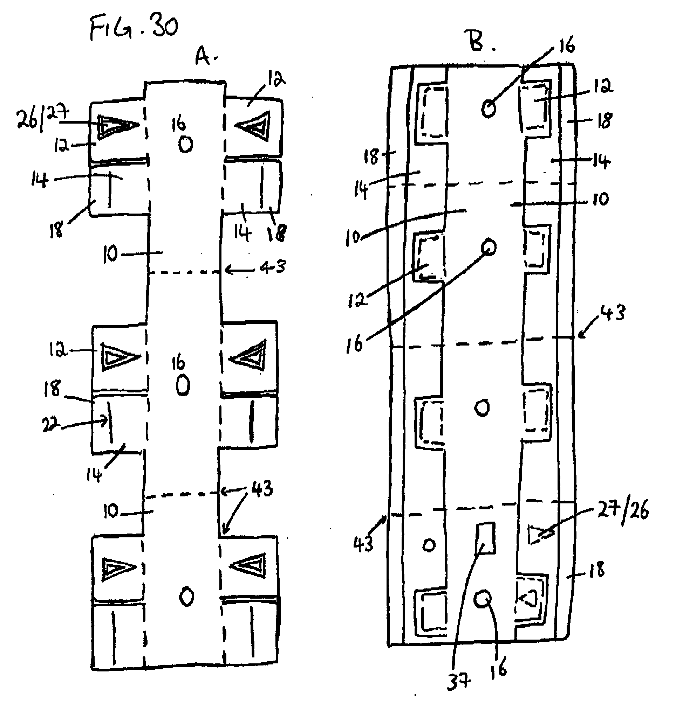

Figure 30A-B on page 21/30 shows two example manufacturing templates for the full channel versions wherein A: the body comprises of a number of the singular invention formed together to form one continuous channel having a repeating pattern of the singular invention incorporated into it. The channel can be snapped or cut off at the perforated lines 43 on the body to become the singular version again and bent or folded at the perforated lines between the body and legs/arms. This is also a channel to create the symmetrical double version and be broken down to the singular symmetrical version. Drawing B is the same idea but with the arms cut from within the legs and the legs and feet joined to form one long continuous channel but which is much stronger and depending on where the channel is cut by the user can have legs either side of the arm for better supporting the insulation. Retaining teeth 26, flanges 37, bends 22 and holes 16 are all shown as an example of the combinations that can be manufactured. Again there are hundreds of combinations.

Figure 31A-I on page 22/30 shows the different types of legs having feet that are made with a combination of features already discussed and that can be manufactured in different combinations: (A) standard straight leg with a square foot 18 bent 22 at an angle to the leg and there is a wire retaining flange 37 on the leg 14. (B) standard straight leg 14 with square foot 18 said foot having a retaining tooth 26 with a bend 22 between the leg 14 and foot 18. (C) straight leg 14 with a square foot 18 bend 22 between the leg and foot with two retaining teeth 26 in the foot 18 and a retaining tooth 26 in the leg 14. (D) straight leg 14 with a square foot 18 and bend 22 between the leg and foot said foot having a hole 16. (E) straight leg having a rectangular foot 18 having a slot 42 with a bend 22 between the leg 14 and foot 18. (F) straight leg 14 with foot 18 having curved off or rounded off corners 118 and bend 22 between the leg and foot. (G) straight leg 14 having a strengthening channel 24 on one side of the leg 14 that continues onto and around a portion of the rectangular foot 18 with a bend 22 between the leg and foot. (H) straight leg 14 and rectangular foot 18 both having a strengthening channel going down one side of the leg around the foot and back up the other side of the leg and also a bend 22 between the leg and foot. (I) a straight leg 14 from the side rear perspective having a foot 18 and a wire retaining flange 37 on the side and curving over the underside of the foot.

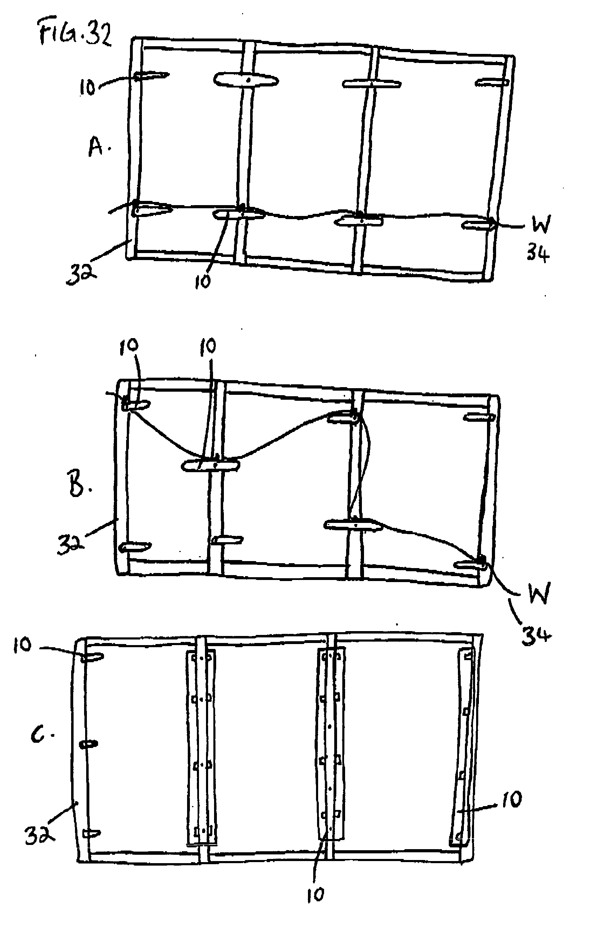

Figure 32A-C on page 23/30 shows three different layouts depicting different versions of the invention set out in various combinations fixed to rafters or studwork. All three figures illustrate how the clips may retain wire and are fixed in both organised and random patterns to the rafters and different combinations of design versions may be used together for the best overall result of fixing insulation between rafters/studwork etc. These figures A-C all show single versions, symmetrical versions and channelled versions.

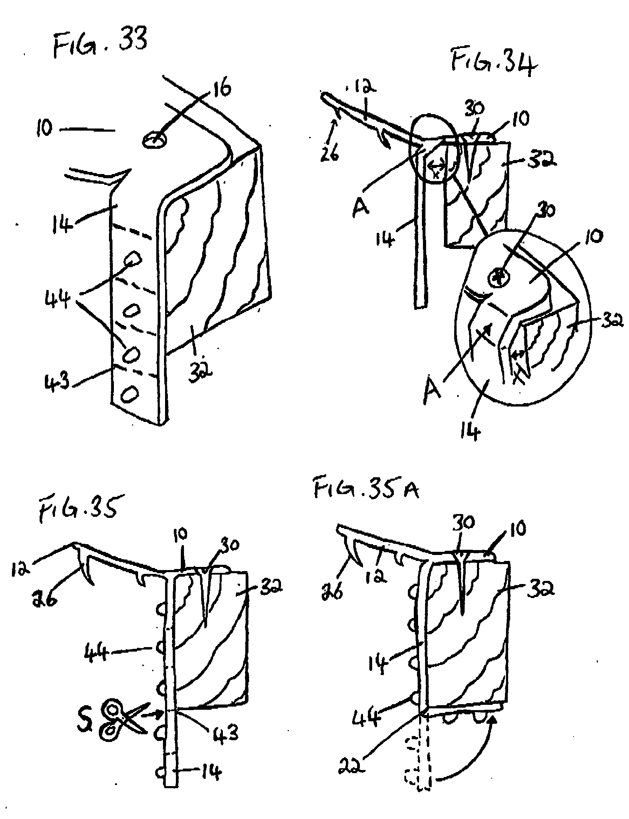

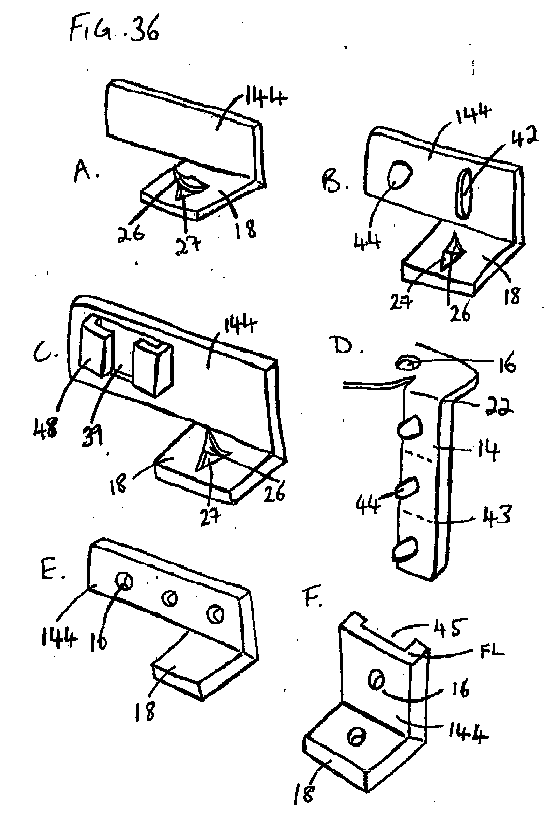

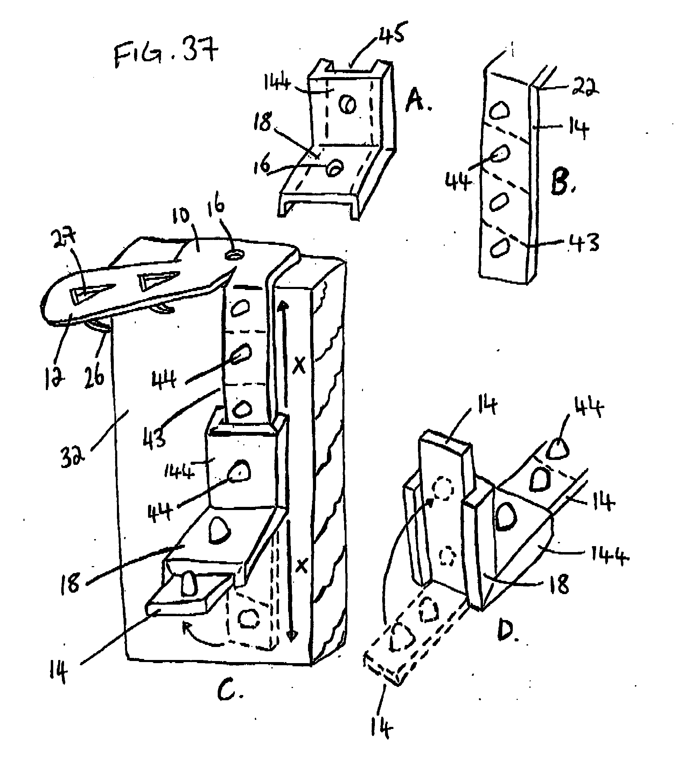

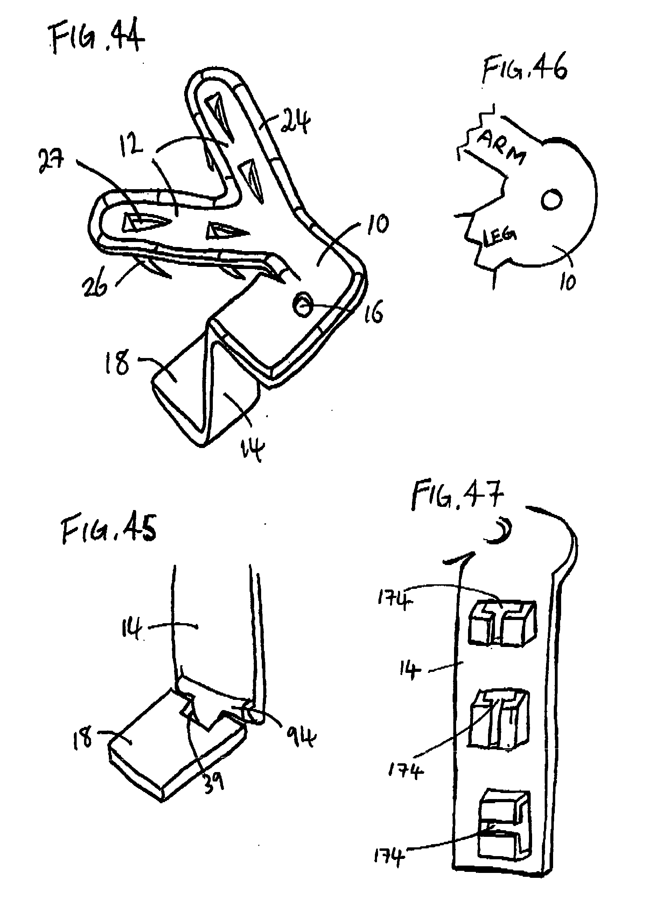

Figure 33 on page 24/30 shows how the leg 14 may have one or more Prongs 44 protruding from the leg that would marry or connect with or into holes of an independent foot or flange or portion of an independent foot to allow the fixing to have a range of adjustment and adjustable positioning for depth control of the foot in retaining the insulation. The leg 14 also shows a Perforation 43 below a Prong 44 said perforation to allow the leg to be snapped off at the perforation point or more easily bent at the perforation point to either reduce the length of the leg where shorter timbers/gaps are present requiring shorter legs, or where the leg can be bent underneath or around another face of the timber to aid in gripping or retaining strength of the fixing upon the timber as illustrated in Figures 35 and 35A also on page 24/30. Figure 34 on page 24/30 shows a modified version of the leg portion MARKED A where it joins to the main body 10: The area of the leg A has a small extension so that the leg is bent or extended further outward than from being tight against the body of the timber. The reason for this is that if an independent or separate foot piece is used and is to move up and down the leg for the adjustability feature and where this foot piece needs to encapsulate the leg to retain the foot on the leg, then a gap shown as X on the drawing is required between the underside of the leg and the surface of the timber for the foot to fit in otherwise it would get stuck and couldn't move. A range of different foot pieces are now shown on Page 25/30 Figure 36 A-F: Figure 36A shows a separate foot 18 having an extended 'ankle' 144 that can be used in conjunction with a leg having multiple receiving sockets as shown on page 30/30 Figure 47. The Ankle 144 is an extension of the foot extending horizontally from the back of the foot which is bent at a right angle to the ankle. Figure 36B shows the same as in A but the Ankle 144 has at least one Prong 44 and one Slot 42 although one or both features can be used (not shown). Figure 36C shows the Foot 18 having a retaining tooth said foot having an Ankle 144 said ankle having two small flanges 48 cut from within the confines of the ankle 144 and bent with one or more bends out of line of the ankle to form two lugs that together form a retaining channel where the leg (not shown) is inserted and housed so that the ankle can run up and down the leg and is adjustable against the leg. An aperture 39 is left in the ankle after the lugs/flanges are bent out of the body of the ankle. Figure 36D shows the leg having prongs and perforations already mentioned in previous figures. Figure 36E shows a foot 18 having an ankle 144 extending horizontally from the rear of the foot bent at an angle to the foot said ankle have one or more holes to fit over the prongs of the leg so the two may be connected together - so the separate foot/ankle piece shown in Fig. 36E would fit over the leg shown in Fig. 36D (and I would like to make that a Double D - 36DD but it will mess up my drawings) so the ankle piece could fit over any of the prongs of the leg via any of the holes in the ankle piece therefore making the overall foot/ankle piece adjustable both vertically and horizontally against the leg for a vast range of adjustability for a large range of thicknesses of insulation and depths of timber. Brilliant! Figure 36F (and I would also like to make that a double F - 36FF but that will also mess up my drawings) shows a foot 18 having a shorter ankle extending vertically from the rear of the foot and this time the ankle 144 has a small portion of each of its sides bent to form a channel so that the foot-ankle unit may fit over the top of a leg and can slide up and down the leg in a vertical range of motion and the hole 16 in the ankle 144 can fit over any prong of the leg to secure the two together as shown in Figure 37C on page 26/30.

Figure 37A on page 26/30 shows another version of the foot-ankle unit where both the foot 18 and ankle 144 have a portion of both sides of their bodies bent to form a channel so that when the foot-ankle unit is attached to the leg, it can be placed along the leg where the user wants it and secured over the prongs of the leg through the holes in the foot-ankle unit and then the leg can be bent up underneath the foot inside the channel to 'lock off' the foot-ankle unit to stop the foot-ankle unit sliding off or becoming separated from the leg (as illustrated in figure 37C-D) once the insulation is in place and, this also means there is no need to use nails or screws to join the foot-ankle unit to the leg thus making it a much simpler and easier to use fixing.

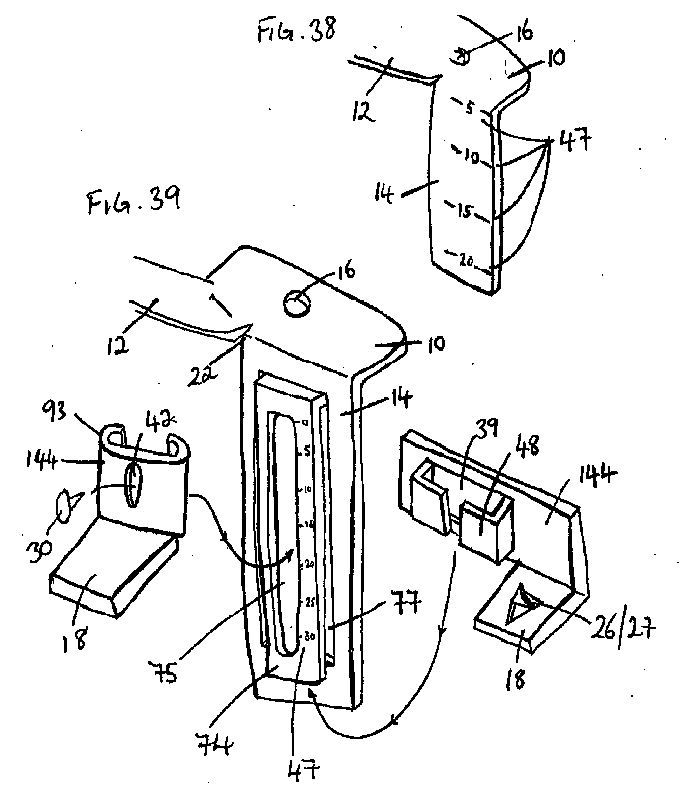

Figure 38 on page 27/30 shows a leg 14 having a measurement scale to allow the user a more accurate means of setting the depth in an adjustable leg apparatus. Figure 39 on page 27/30 shows another modified leg wherein instead of the leg having an extension piece as shown in Figure 34, the main leg 14 has another mini leg 74 cut from within the main leg 14 and bent out of alignment of the main leg to provide a means for the separate foot-ankle unit to slide up and down the mini leg with a full range of adjustability whilst the main leg is shaped to fit tightly to the surface of the timber/rafter (not shown). There is a gap 77 between the two legs formed from the mini leg having one or more bends to make it protrude outwardly from the main leg far enough to allow the foot-ankle unit to get a grip or be fixed to or around the mini leg therefore holding the two adjustably together. The mini leg 74 may also have an aperture or slot 75 for the purpose of allowing a nail to be inserted through it via the foot-ankle unit into the timber so that there is an alternative means of securing the foot-ankle unit to the leg once the position has been chosen by the user as shown in Figure 39. Also in Figure 39 the illustration also shows the separate foot-ankle unit with the horizontal ankle and channel just to demonstrate how the unit works with either a horizontal or vertically displaced ankle. The benefit of the horizontal foot-ankle unit is that it can extend further away from the leg which may give more room for manoeuvre of fixing for many different types and sizes of insulation and where there may be tight working spaces etc.

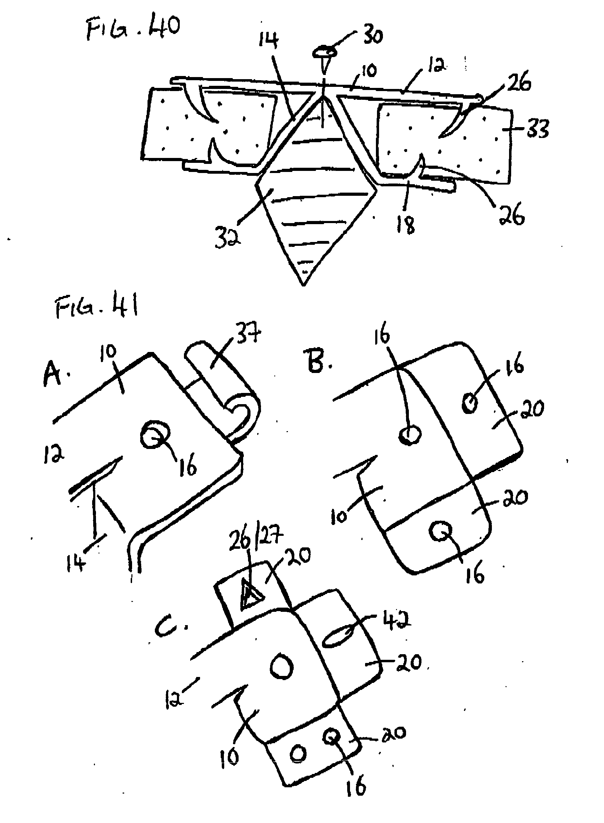

Figure 40 on page 28/30 shows a symmetrical version of the invention designed to fit around/onto a diamond shaped timber and shows the main body 10 still being fixed to the timber by a nail but shows the legs bent at different angles to follow the contour of the timber and not just protruding straight down from the body as shown in other drawings.

Figure 41A-C on page 28/30 shows more combinations of the main body 10 having different features such as wire retaining flanges, extension flanges, main body with two or three additional flanges and so on with some of the flanges having holes, slots and retaining teeth etc.

Figure 42A-B on page 29/30 shows the invention having an adjustable arm 12 to the main body 10 said invention wherein either the arm or main body have one or more flanges bent into a hinge arrangement for the two to connect together and have a range of adjustability as illustrated in Figure 42B. In Fig.42B the arm is a separate part and is connected to the body through a bent flange arrangement and the flanges in the main body allow the arm to pivot around a portion of the body so the arm can be moved out of the way of any insulation and then pivoted back around and clamped down on top of it. The separate arm also has retaining teeth and strengthening channels.

Figure 43 on page 29/30 shows a square shaped main body having a hole. This is because the main body can be rectangular, circular, square, oblong, oval or a combination of straight and curved areas - in fact any shape that allows it to have at least one arm and one leg connected to it.

Figure 44 on page 30/30 shows the invention having a Y shaped arm. The Y shaped arm may also have retaining teeth and strengthening channels and the two fingers of the Y are used to spread over a wider area of the insulation and provide a greater retaining strength over a wider area.

Figure 45 on page 30/30 shows the basic leg 14 and foot 18 being adjustable without an ankle piece and the leg 14 has a portion of its body bent to form a hinge 94 that interlocks with the foot 18 that has a corresponding flange 39 to form the hinge arrangement, although not very well drawn! Figure 46 on Page 30/30 shows the invention having a circular main body having an arm and a leg.

Figure 47 on page 30/30 shows a leg having multiple channels/sockets 174 for the purpose of receiving a separate ankle piece; the channels/sockets 174 being cut from within the confines of the leg and bent out of alignment to form the channels or flanges that are then bent to create the retaining channel housing. Note the flanges/channels may be formed in different directions to house the ankle piece horizontally or vertically or a combination of both. The flanges are generally cut in pairs to be used one each side of the ankle unit to retain it but may be used singly, not shown.

## Claims

1. An Insulation Fixing comprising a main body that may be square or rectangular, oblong or circular or having a combination of straight and curved portions, that may be extended and formed as an elongate channel having at least one insulation retaining arm, leg and foot all of which can be cut from within the main body or supplied as separate pieces to the main body, said body that is generally flat and when incorporating the arm, leg and foot can be bent or formed into a jaw like clamp arrangement to clamp around and retain the insulation against the rafter or studwork from two or more sides of the insulation so that it can be fixed to one or more sides/faces of a rafter/timber/fixing surface, said jaw mechanism that is made from the combination of the arm, leg and foot that are shaped and folded or bent to the contour of the fixing surface and insulation. The fixing can also be made from a combination of main body and separate body parts to enable adjustability but either body type arrangement will incorporate any or all of a at least one bent or folded portion, hole, slot, apertures, perforations, strengthening channels, retaining teeth with or without barbs, teeth with apertures, teeth with slots, adjustable parts, adjustable legs with or without feet, pivoting parts, feet, feet with hole/s, feet with slot/s, feet with retaining teeth, detachable feet, an arm with retaining teeth, a leg with retaining teeth, hinged parts, flanges, prongs. Any of these features which are formed from within, on or around the main body and allowing the invention to be used in a variety of ways/combinations such as having the means to hook the invention main body over two or more sides of a rafter/studwork/fixing surface (fixing surface such as a steel joist or lintel or cylindrical elongate batten) by the use of one or more flanges or extension body piece/s that are bent out of alignment of the main body and can also be bent or shaped to follow the contour of the different shapes and sizes of body of the rafter/studwork and insulation One alternative version that can be made from the invention is a mirrored design or symmetrical shape or double sided design that has the central main body portion positioned over the front rafter/fixing surface/studwork with one or more insulation retaining, 'stop' pieces such as arms, legs and clamping parts that extend from *both* sides of the main body to encapsulate the top, side and bottom edges of the insulation material on each side of the rafter/studwork therefore reducing the number of fixings needed, as one fixing could retain two insulation boards -one each side of the rafter. When the body is made of two or pieces it has a means of adjustment such as adjustable arm or leg or foot or either of, to adjust the depth of the 'stop' means making the fixing more universal for all types and thicknesses of insulation. The clamping arrangement could be described as a clamp having a neck and a jaw where the neck is adjustable to move the jaws closer together or further apart or where there is an arm and a claw where the length of the arm is adjustable to move the claws closer or further. A further modification of the main body is where the main body is drawn out or made elongate and formed into a channel to fit over the rafter or to the inside of the rafter. The
